# EUROPEAN PATENT APPLICATION

(11) **EP 1 158 645 A1**
(43) Date of publication of application: **28.11.2001**
(21) Application number: 00610048.1
(22) Date of filing: 16.05.2000
(51) Int. Cl.: H02J 7/00

(54) **A compact charger for an electronic device**

(71) Applicant: Telefonaktiebolaget L M Ericsson (Publ), 126 25 Stockholm (SE)
(72) Inventor: Bengtsson, Niklas, 244 1 Kävlinge (SE); Dehlén, Torbjörn, 231 32 Trelleborg (SE)
(74) Representative: Boesen, Johnny Peder

(57) **Abstract**

A charger for an electronic device, said charger comprising a housing (1) provided with an AC power plug (2) for plugging into a standard AC power outlet (7). The housing (1) is further provided with an AC/DC converter for converting the AC power into DC, and exposed DC terminals (6) are provided on a side of said housing (1) that is substantially perpendicular to the side of the housing (1) that is provided with the AC power plug (2). The dimensions of the housing (1) are such that the distance from the side provided with the exposed DC terminals (6) to its opposed side is substantially less than the extent of the housing (1) in any direction in a plane parallel with said side.

## Description

The invention relates to a charger for an electronic device, said charger comprising a housing provided with an AC power plug for plugging into a standard AC power outlet, said housing further being provided with an AC/DC converter for converting the AC power into DC, and exposed DC terminals provided on a side of said housing that is substantially perpendicular to the side of the housing that is provided with the AC power plug.

Chargers for electronic devices provided with rechargeable batteries are known in a number of embodiments. The most common type of chargers comprises an AC power plug provided with an electrical wire that is connected to the charger. The charger is provided with an AC/DC converter and with exposed DC terminals for contacting charging contacts provided on the electronic device. The exposed DC terminals may be integrated in the charger housing if the charger is of the type that can be positioned on a tabletop or they can be provided in a plug at the end of a lead wire extending from the charger housing.

Another type of chargers is known from US-A-5,587,645, US-A-5,075,615 and EP-A2-724,347. Each of these documents discloses a charger that comprises a housing provided with an AC power plug and with exposed DC terminals. In relation to the above-mentioned chargers these chargers are not provided with an electrical wire. They are therefore handier than the above-mentioned chargers, since an electrical wire that entangles with other items whenever it is stored or packed is avoided.

US-A-5,138,351 disclose a similar charger in which an electrical wire provided with an AC power plug optionally may be rolled out.

The above-mentioned chargers are, however, bulky due to their shape and the mounting of the prongs of the AC power plug. Thus, they occupy much space and are difficult to store or pack or even to put into a pocket or the like.

It is an object of the invention to provide at charger of the type mentioned in the opening paragraph, which charger occupies little space and are easy to store and pack.

This object is achieved by arranging the charger mentioned in the opening paragraph such that the dimensions of the housing are such that the distance from the side provided with the exposed DC terminals to its opposed side is substantially less than the extent of the housing in any direction in a plane parallel with said side.

Thereby the charger has a relatively flat shape and can be easily stored or packed in a bag or even put into a pocket. The charger is flat in a plane that is parallel with the extension of the AC power plug.

In a preferred embodiment the housing is substantially box-shaped and the exposed DC terminals are positioned at the largest side of the box-shaped housing. The box-shaped charger preferably has dimensions that substantially correspond to the dimensions of the electronic device, such that it can readily be stored or packed together with the electronic device.

The exposed DC terminals are preferably arranged in a recess that is able to support the electronic device. Thereby the charger, when it is plugged into an AC power outlet, is able to support the electronic device when the electronic device is positioned in the recess.

The AC power plug may preferably comprise two prongs positioned in a plane parallel with the side that comprises the exposed DC terminals. Thereby the prongs do not "disturb" the flatness of the charger and it can be readily handled and stored.

In order to make the use of the charger more flexible, the AC power plug may be arranged rotatable in relation to the housing such that the prongs by rotation of the power plug optionally can be positioned in a plane perpendicular to the side that comprises the exposed DC terminals. Thereby the charger can be plugged into a standard AC power outlet with the side provided with the exposed DC terminals facing upwards even when the AC power outlet is provided with an AC power socket in which the openings for the prongs are positioned above each other.

In a preferred embodiment, each of the prongs has a circular cross-section. Thereby the charger fits standard AC power outlets provided in a number of countries. It should be emphasised, however, that some countries have other standards for the design of AC power outlets. Therefore, the charger may also be provided with e.g. two parallel flat prongs having rectangular cross-sections. If the standard so prescribes, the flat prongs could be angled in relation to each other.

In a preferred embodiment the charger is adapted to be used with a mobile telephone.

It shall be emphasised that the term "comprise/comprising" when used in this specification is taken to specify the presence of stated features, integers, steps or components but does not preclude the presence or addition of one or more other features, integers, steps components or groups thereof.

The invention will be described in detail in the following with reference to the drawings in which
Fig. 1 shows a charger according to the invention in a first embodiment,
Fig. 2 shows the charger shown in Fig. 1 in use with a mobile telephone, and
Fig. 3 shows a charger according to the invention in a second embodiment.

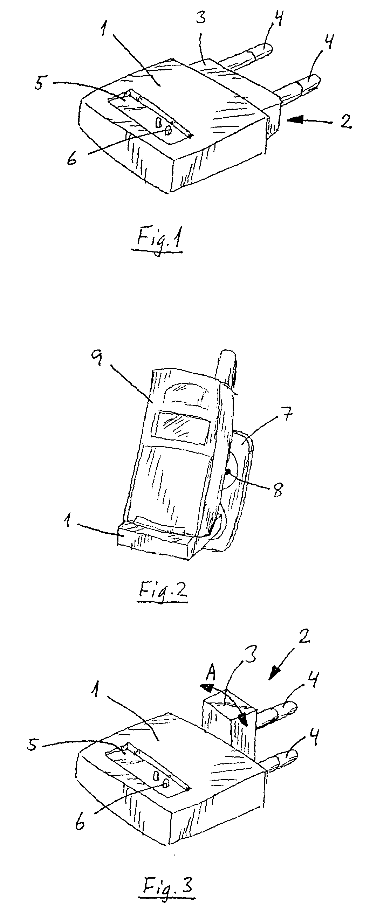

With reference to Fig. 1, a first embodiment of a charger according to the invention comprises a housing 1 that is provided with an AC power plug 2 which in the shown embodiment comprises a base 3 and two prongs 4, each having a circular cross-section. The AC power plug 2 is intended for use in a standard AC power outlet.

The housing is further provided with a recess 5 in which two DC terminals 6 are provided. The recess 5 is formed in such a way that it can support an electronic device, such as a mobile telephone when it is positioned in the recess.

Furthermore, the housing comprises an AC/DC converter positioned between the AC power plug 2 and the DC terminals 6. This AC/DC converter may be of any conventional type.

The charger is designed as a relatively flat item having the recess 5 and the two DC terminals positioned at the side that constitutes the top surface, when the charger is in use, and having the prongs 4 extending in a plane that is parallel with the side provided with the recess 5. In this way the charger constitutes a form of "carrier tray" for the electronic device when it is plugged into a standard AC power outlet.

Fig. 2 shows the charger plugged into a standard AC power outlet 7 provided in a wall. The shown AC power outlet 7 is provided with two AC power sockets 8 positioned one above the other. The openings of each AC power socket are positioned beside each other.

A mobile telephone 9 is positioned in the recess 5 of the charger having its charging contacts (not shown) in contact with the DC terminals 6 positioned in the recess 5. The mobile telephone 9 is supported by the recess 5 in such a way that it is stable in the shown position.

When AC power is supplied to the charger via the AC power outlet 7 the AC/DC converter within the charger converts the AC power to DC which is transmitted to the DC terminals 6 provided in the recess 5. Since the charging contacts on the mobile telephone 9 are in contact with the DC terminals 6, the rechargeable battery of the mobile telephone 9 is recharged.

Fig. 3 shows a second embodiment of a charger according to the invention. This charger corresponds essentially to the charger shown in Fig. 1 and like reference numerals are used for like parts.

The charger shown in Fig. 3 comprises a housing 1 that is provided with an AC power plug 2 comprising a base 3 and two prongs 4, each having a circular cross-section. The housing is further provided with a recess 5 in which two DC terminals 6 are provided. Furthermore, the housing comprises an AC/DC converter positioned between the AC power plug 2 and the DC terminals 6. This structure of the charger corresponds to the structure of the charger shown in Fig. 1.

However, in the embodiment shown in Fig. 3, the AC power plug 2 is arranged rotatable in relation to the housing 1 according to the double arrow A. The prongs 4 of the AC power plug 2 may therefore optionally be positioned in a plane parallel with the surface of the housing 1 that comprises the exposed DC terminals 6 (as shown in Fig. 1) or in a plane that is perpendicular to the surface of the housing 1 that comprises the exposed DC terminals 6 (as shown in Fig. 3). Thereby the charger can be used in any standard AC power outlet regardless of the position of the openings for the prongs 4.

In the shown embodiments the charger has a size that to some extent corresponds to the size of the mobile telephone 9. For instance, a cross-section of the charger taken perpendicular to the direction of the prongs 4 corresponds in size substantially to a cross-section of the mobile telephone 9. Therefore, the charger can readily be stored or packed together with the mobile telephone 9.

A charger according to the invention may have another design than the one shown in Figs. 1-3. For instance, the prongs 4 may be designed in a different way in order to fit other types of standard AC power outlets.

Likewise, the charger may be provided with charging indicator means in order to indicate for the user that charging is taking place.

## Claims

1. A charger for an electronic device, said charger comprising a housing (1) provided with an AC power plug (2) for plugging into a standard AC power outlet (7), said housing (1) further being provided with an AC/DC converter for converting the AC power into DC, and exposed DC terminals (6) provided on a side of said housing (1) that is substantially perpendicular to the side of the housing (1) that is provided with the AC power plug (2), **characterised in that** the dimensions of the housing (1) are such that the distance from the side provided with the exposed DC terminals (6) to its opposed side is substantially less than the extent of the housing (1) in any direction in a plane parallel with said side.

2. A charger according to claim 1, **characterised in that** the housing (1) is substantially box-shaped and that the exposed DC terminals (6) are positioned at the largest side of the box-shaped housing (1).

3. A charger according to claims 1 or 2, **characterised in that** the exposed DC terminals (6) are arranged in a recess (5) that is able to support the electronic device.

4. A charger according to any one of claims 1-3, **characterised in that** the AC power plug (2) comprises two prongs (4) positioned in a plane parallel with the side that comprises the exposed DC terminals (6).

5. A charger according to claim 4, **characterised in that** the AC power plug (2) is arranged rotatable in relation to the housing (1) such that the prongs (4) optionally can be positioned in a plane perpendicular to the side that comprises the exposed DC terminals (6).

6. A charger according to claims 4 or 5, **characterised in that** each of the prongs (4) of the AC power plug (2) has a circular cross-section.

7. A charger according to any one of claims 1-6, **characterised in that** the charger is adapted to be used with a mobile telephone (9).
